(19) Europäisches Patentamt
European Patent Office
Office européen des brevets

(11) EP 0 964 555 A1

(12) EUROPÄISCHE PATENTANMELDUNG

(43) Veröffentlichungstag:
15.12.1999 Patentblatt 1999/50

(51) Int. Cl.⁶: **H04L 25/06**, H04L 25/03,
H04L 25/49

(21) Anmeldenummer: 98110217.1

(22) Anmeldetag: 04.06.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(71) Anmelder:
SIEMENS AKTIENGESELLSCHAFT
80333 München (DE)

(72) Erfinder: Schenk, Heinrich, Dr.
81476 München (DE)

(54) **Pegelregelung und adaptive Filterung in CAP-Empfängern**

(57)  In einem adaptiven CAP-Empfängers mit einem taktgeregelten A/D-Wandler zum Wandeln des Eingangssignals, einer digitalen Pegelregelung, einer adaptiven geregelten Empfangsfilterung mit zwei parallelen Filtern und einem nachfolgenden Entscheider zur Ausgabe der rekonstruierten Signalkoordinaten, wird die digitale Pegelregelung und die adaptive Empfangsfilterung entkoppelt, indem entweder die Einstellung der digitalen Pegelregelung oder die Koeffizienteneinstellung der adaptiven Empfangsfilterung aktiv ist.

Fig. 1

EP 0 964 555 A1

# Beschreibung

Die Erfindung betrifft einen adaptiven CAP-Empfänger und betrifft insbesondere ein Verfahren zur Ansteuerung der einzelnen Regelkreise eines adaptiven CAP-Empfängers, um ein stabiles Einlaufen und einen stabilen Betrieb des Empfängers zu gewährleisten.

Der Aufsatz AT&T and Bellcore: Design of Digital Carrierless AM/PM Transceivers, TEI.1.4/92-149, August 19, 1992 gibt eine Einführung in das Design digitaler, trägerloser CAP Transceiver und Empfänger, so daß die grundlegenden Strukturen hier nur kurz beschrieben werden.

Bei hohen Datenmengen erweist sich für die Duplex Datenübertragung über Teilnehmeranschlußleitungen ein Frequenzmultiplexverfahren trotz des höheren Bandbreitebedarfs als günstiger als ein Basisbandgleichlageverfahren mit Echokompensation, da das in diesem Geschwindigkeitsbereich dominante Nahnebensprechen durch selektive Filterung unterdrückt werden kann. Für die schnelle Datenübertragung im Anschlußbereich der Telefonteilnehmer werden daher unter dem Stichwort VDSL (Very high bitrate digital Subscriber Line) derzeit Einträgerverfahren wie QAM (Quadraturamplitudenmodulation) und CAP (Carrierless Amplitude/Phase Modulation) diskutiert, da hiermit die verschiedenen Frequenzbereiche für Hin- und Rückrichtung in einfacher Weise durch geeignete Wahl der Träger- bzw. Mittenfrequenzen realisiert werden können. Die Datenraten bewegen sich dabei in einem Bereich von etwa 2 Mbit/s bis 50 Mbit/s. Dabei soll sowohl ein symmetrischer als auch ein unsymmetrischer Betrieb möglich sein. Ein symmetrischer Betrieb, d.h. gleiche Datenraten in beide Richtungen, wird meist bei kommerziellen Anwendungen gefordert, während ein unsymmetrischer Betrieb, d.h. unterschiedliche Datenraten für die beiden Richtungen, im privaten Bereich meist ausreichend ist (hohe Datenrate zum Teilnehmer, niedrige Datenrate zum Service Provider).

Beim ADSL-Standard (Asymmetric Digital Subscriber Line) wurde bisher das diskrete Multitonverfahren standardisiert. Es ist jedoch damit zu rechnen, daß auch in diesem Anwendungsbereich Einträgerverfahren mit der CAP-Technologie standardisiert werden.

In einem CAP-System werden sendeseitig die binären Daten zu Gruppen vom L Bits zusammengesetzt und einem Codierer zugeführt. Dieser ordnet jeder der $2^L$ Kombinationen einen Punkt in einem zweidimensionalen Signalraum zu, der durch die kartesischen Koordinaten $(x, y)$ definiert ist. Dieser Signalpunkt kann auch als Punkt der komplexen Zahlenebenen betrachtet werden.

Es wird zunächst ein CAP-Modulator betrachtet. Die zu übertragenden Signalpunkte, definiert durch die beiden kartesischen Koordinaten $a_k$ und $b_k$ zum Zeitpunkt $kT$, werden im Schrittakt (Symbolrate) $f_T = 1/T$ abgetastet und auf getrennte Teilkanäle gegeben, in denen sich jeweils ein Sendefilter befindet. Danach werden die Signale beider Teilkanäle addiert und das Sendesignal auf den Übertragungskanal gegeben.

In einem entsprechenden CAP-Empfänger, der das Gegenstück zu dem CAP-Transceiver bildet, wird das empfangene Eingangssignal einer A/D-Wandlung mit einem vorgegebenen Abtasttakt unterworfen. Nach der digitalen A/D-Wandlung wird eine digitale Pegelregelung durchgeführt, um den Pegel des Empfangs/Nutzsignals möglichst unabhängig von der Übertragungsleitung und dem Übersprechen des eigenen Sendesignals sowie aller anderen Outbandstörungen auf einen konstanten Wert einzustellen. Nach der digitalen Pegelregelung gelangen die Abtastwerte auf das Paar der Empfangsfilter. Dabei müssen sich die Koeffizienten des Filterpaares adaptiv einstellen, wobei mit einem festen Koeffizientensatz, der für eine bestimmte Leitungslänge ausgelegt ist, begonnen wird. Nach der Empfangsfilterung werden die Signalwerte mit der Symbolrate $f_T$ abgetastet und einem Entscheider zugeführt. Dieser hat die Aufgabe, jedem empfangenen Wertepaar Empfangsdaten zuzuordnen. Nach erfolgter Einstellung und bei hinreichend geringen Störungen stimmen diese Empfangswerte, abgesehen von einer konstanten Verzögerung und einer zusätzlichen Drehung des komplexen Datenvektors um $\pm 90°$ oder $\pm 180°$, mit den gesendeten Datenwerten überein.

Insgesamt enthält der adaptive CAP-Empfänger drei Regelkreise, nämlich die Regelung des Abtasttaktes, die Regelung der digitalen Pegelanpassung und die Regelung der Filterkoeffizienten. Dabei tritt das Problem auf, daß bei einer Verkopplung der Regelkreise kein stabiles Verhalten des CAP-Empfängers gewährleistet ist.

Der Erfindung liegt daher die Aufgabe zugrunde, ein Verfahren zur Entkopplung der Regelkreise eines CAP-Empfängers, um ein stabiles Verhalten des CAP-Empfängers zu gewährleisten, sowie einen entsprechenden CAP-Empfänger zu schaffen.

Die Aufgabe wird durch die Merkmale der Ansprüche 1 und 11 gelöst. Bevorzugte Ausgestaltungen der Erfindung sind Gegenstand der Unteransprüche.

Erfindungsgemäß wird zur Regelung eines CAP-Empfängers mit einem taktgeregelten A/D-Wandler zum Wandeln des Eingangssignals, einer digitalen Pegelregelung, einer adaptiven geregelten Empfangsfilterung mit zwei parallelen Filtern und einem nachfolgenden Entscheider zur Ausgabe der rekonstruierten Signalkoordinaten die digitale Pegelregelung und die adaptive Empfangsfilterung entkoppelt, indem entweder die Einstellung der digitalen Pegelregelung oder die Koeffizienteneinstellung der adaptiven Empfangsfilterung aktiv ist.

Vorzugsweise werden zur Steuerung der Entkopplung zwei ENABLE-Signal generiert, wobei das erste ENABLE-Signal die digitale Pegelregelung aktiviert, während das zweite ENABLE-Signal die Koeffizienteneinstellung der adaptiven Empfangsfilterung aktiviert. Zur Generierung der ENABLE-Signale können der Mittelwert der beiden Entscheidungsfehler und der Mittelwert für den Empfangspegel verwendet werden. Dabei wird der Mittelwert für den Empfangspegel mit einem vorgegebenen Referenzwert verglichen, wobei das erste ENABLE-Signal auf Eins und das zweite ENABLE-Signal auf Null gesetzt werden, wenn der Mittelwert größer als der Referenzwert ist. Wenn der Mittelwert des Empfangspegels kleiner als der Referenzwert ist, wird erste ENABLE-Signal auf Null gesetzt, wobei jedoch das zweite ENABLE-Signal erst dann auf Eins gesetzt wird, wenn der mittlere Entscheidungsfehler kleiner als eine vorbestimmte Schwelle ist.

Vorzugsweise wird in der Startphase, d.h. dem Einlaufen des CAP-Empfängers nur mit einem vierstufigen CAP-Signal gearbeitet.

Ferner regelt die Pegelregelung den Verstärkungsfaktor so, daß sich am Ausgang des Empfangsfilterpaares ein vorgegebener Pegelwert ergibt.

Ferner wird zur Regelung der Koeffizienteneinstellung der jeweilige Entscheidungsfehler verwendet.

Ferner wird die Taktregelung aus den Werten vor und nach dem Entscheider sowie einem Koeffizienten des Filterpaares abgeleitet.

Bevorzugte Ausführungsformen der Erfindung sind nachfolgend anhand der Figuren beschrieben.

Fig. 1 zeigt das Blockschaltbild eines adaptiven CAP-Empfängers,

Fig. 2 zeigt das Blockschaltbild der Pegelregelung,

Fig. 3 zeigt das Blockschaltbild der Koeffizienteneinstellung,

Fig. 4 zeigt ein Blockdiagramm der Taktregelung,

Fig. 5 zeigt ein Blockschaltbild mit der Ableitung der Mittelwerte zur Generierung der ENABLE-Signale, und

Fig. 6 zeigt das Blockschaltbild der Generierung der ENABLE-Signale.

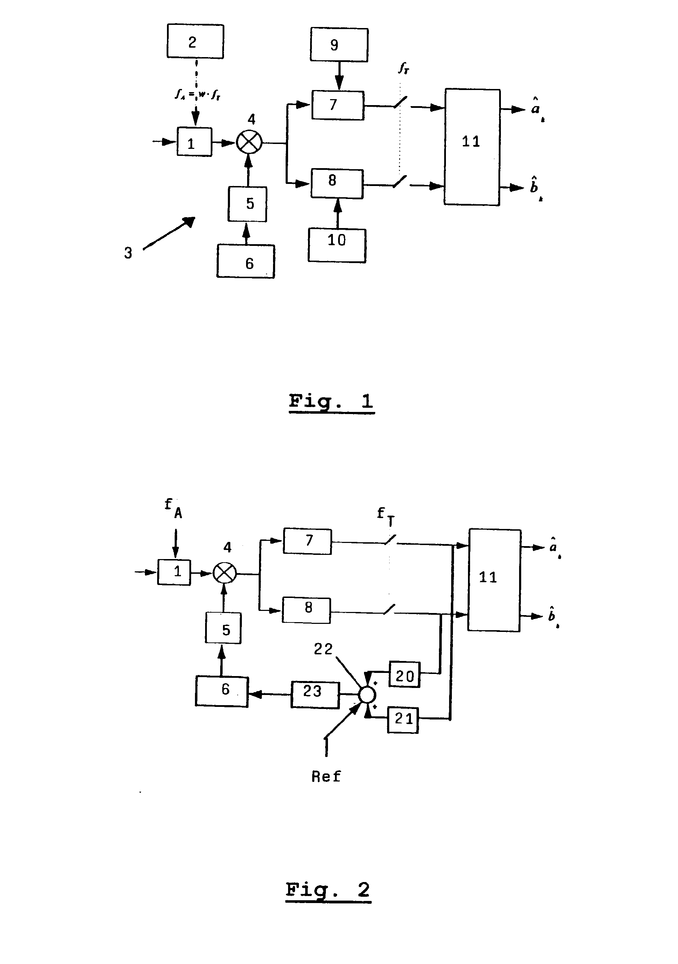

Fig. 1 zeigt ein Blockschaltbild eines adaptiven CAP-Empfängers. Ein Empfangssignal I wird in einem A/D-Wandler 1 mit einer Frequenz $f_A$, die ein ganzzahliges Vielfaches der Abtastfrequenz $f_T$ ist ($f_A = w \cdot f_T$) in ein digitales Empfangssignal gewandelt. Die Frequenz der Abtastung der A/D-Wandlung ist über eine Taktregelung 2 regelbar. Nach dem A/D-Wandler 1 wird eine digitale Pegelregelung mit einem Pegelregler 3 bestehend aus einem Multiplikator 4 und einem regelbaren Verstärker 5 durchgeführt, um den Pegel des Empfangssignals möglichst unabhängig von der Übertragungsleitung und dem Übersprechen des eigenen Sendesignals sowie aller anderen Outbandstörungen auf einen konstanten Wert einzustellen. Der im Verstärker 5 erzeugte Verstärkungsfaktor AGC wird über einen Regler 6 eingestellt. Nach der digitalen Pegelregelung gelangen die Abtastwerte des Empfangssignals auf ein Empfangsfilterpaar 7 und 8, wobei der Empfangsfilter 7 den Koeffizientensatz h1 und der Empfangsfilter 8 den Koeffizientensatz h2 aufweist. Die Koeffizientsätze h1, h2 der Filterpaare 7 und 8 müssen sich adaptiv einstellen, wobei mit einem festen Koeffizientensatz, der für eine bestimmte Leitungslänge ausgelegt ist, begonnen wird. Zu diesem Zweck sind die Koeffizienten der Filter 7 und 8 jeweils mit einer Filtereinstellung 9 und 10 regelbar. Nach der Empfangsfilterung in den Filtern 7 und 8 werden die beiden Signale mit der Symbolrate $f_T$ abgetastet und einem Entscheider 11 zugeführt. Der Entscheider 11 hat die Aufgabe, jedem empfangenen Wertpaar Empfangsdaten zuzuordnen. Nach erfolgter Einstellung und bei hinreichend geringen Störungen stimmen die ausgegebenen Empfangswerte $\hat{a}_k$ und $\hat{b}_k$ abgesehen von einer konstanten Verzögerung und einer zusätzlichen Drehung des komplexen Datenvektors um $\pm 90°$ oder $180°$ mit den gesendeten Datenwerten überein.

Fig. 2 zeigt ein Blockschaltbild der Pegelregelung. Dabei steuert die Regelung 6 den Verstärkungsfaktor des Verstärkers 5 derart, daß sich am Ausgang des Empfangsfilterpaares 7 und 8 ein mit Hilfe eines spezifischen Referenzwertes vorgebbarer Pegel ergibt. Das Regelkriterium wird daher aus den im Symboltakt abgetasteten Werten am Ausgang des Filterpaares 7, 8 ermittelt, indem der Absolutwert der gefilterten Daten in Betragsbildner 20 und 21 ermittelt werden, und die Absolutwerte sowie ein Referenzwert Ref einem Addierer 22 zugeführt werden. Nach einer Mittelung in einem Mittelwertbildner 23 wird der erzeugte Mittelwert dem Regler 6 zur Regelung des Verstärkungsfaktors AGC zugeführt.

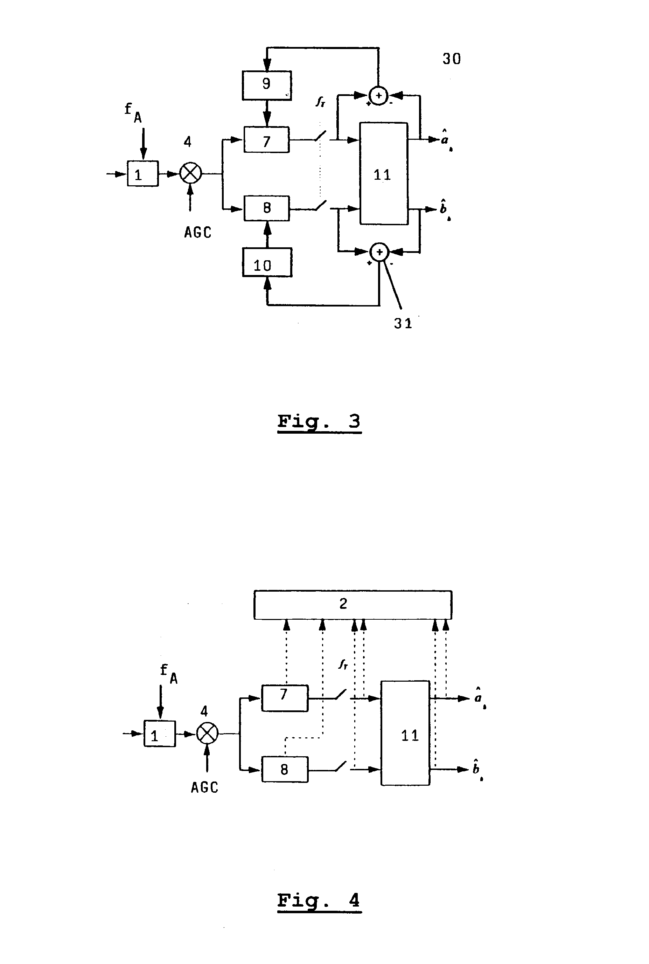

Fig. 3 zeigt ein Blockschaltbild für die Einstellung der Filterkoeffizienten. Zur Einstellung der jeweiligen Filterkoeffizienten wird der Entscheidungsfehler des Entscheiders 11 herangezogen, d.h. die Regelinformation zur Einstellung der Filterkoeffizienten wird unmittelbar aus den Differenzwerten der Signale vor und nach dem Entscheider 11 gewonnen. Dafür werden die Signalwerte der beiden Filterzweige vor und nach dem Filter 7, 8 jeweils einem Addierer 30, 31 zugeführt, wobei der Signalwert nach dem Entscheider 11 negativ genommen wird. Der sich ergebende Entscheidungsfehler kann unmittelbar als Regelsignal für den jeweiligen Regler zur Einstellung der Filterkoeffizienten verwendet werden. Bei fehlerfreier Übertragung kann unter Anwendung geeigneter Einstellalgorithmen Konvergenz sichergestellt werden. Da zu Beginn des Verbindungsaufbaus mit vielen Fehlentscheidungen des Entscheiders 11 zu rechnen ist, kann zunächst nicht mit einem sicheren Einlaufen des Filterpaares 7, 8 gerechnet werden. Daher wird zu Beginn zunächst für die Übertragung ein vierstufiges CAP-Signal verwendet, um die Anzahl der Fehlentscheidungen trotz Fehleinstellung des Empfangsfilterpaares möglichst gering zu halten.

Für die Koeffizienteneinstellung kann im Hinblick auf eine möglichst einfache Realisierung der sog. SGN-SGN-Algorithmus verwendet werden. Die Filterkoeffizienten errechnen sich dabei wir folgt:

$$h_{1n}(i) = h_{1n}(i-1) - 2^{-\mu} \cdot SGN\{y(k-n)\} \cdot SGN\{\Delta \hat{a}_k\}$$

und

$$h_{2n}(i) = h_{2n}(i-1) - 2^{-\mu} \cdot SGN\{y(k-n)\} - SGN\{\Delta \hat{b}_k\}$$

wobei n = 0, ..., N-1 die Nummer des Koeffizienten, i die Nummer des Regelschritts und k der zeitliche Laufindex bedeutet.

Die Stellgröße $2^{-\mu}$ beeinflußt die Einstellgeschwindigkeit sowie die Genauigkeit der Filtereinstellung. Es ist sinnvoll, den Wert $\mu$ in Abhängigkeit des Fehlermittelwertes einzustellen. Zu Beginn der Filtereinstellung bei entsprechend großem mittleren Fehler kann zur Beschleunigung des Einlaufvorgangs mit einer relativ großen Stellweite (kleinem $\mu$) gearbeitet werden. Mit kleiner werdenden Fehler ist die Stellgröße schrittweise bis zu ihrem Endwert zu erhöhen.

Im Gegensatz dazu ist die Stellgröße $2^{-\mu}$ zu verkleinern, wenn größere Outbandstörungen vorhanden sind, da die Empfindlichkeit der Sperrdämpfung der Empfangsfilter 7, 8 gegenüber Koeffizientenveränderungen sehr groß ist. Durch Bestimmung des Mittelwerts nach dem Pegelverstärker 3 kann ein Kriterium für die Größe der Outbandstörungen abgeleitet werden, da der Pegelverstärker 3 den Pegel nur des Nutzsignals konstant hält. Bei Outbandstörungen ist damit mit einer größeren Einstellzeit zu rechnen.

Fig. 4 zeigt ein Blockschaltbild für die Regelung des Abtasttaktes. Die Ableitung der Information für die Regelung des Abtasttaktes kann ebenfalls mit Hilfe der Werte vor und nach dem Entscheider 11 gewonnen werden. Eine Verschiebung der Abtastphase bewirkt bei unveränderten Filterkoeffizienten neben einer Zunahme der Symbolinterferenzen eine zusätzliche Drehung des empfangenen Datenvektors.

Mögliche Regelgrößen erhält man beispielsweise mit

$$\Theta_k = u_1(k \cdot T) \cdot \hat{b}_k - u_2(k \cdot T) \cdot \hat{a}_k$$

oder

$$\Theta_k = u_1(k \cdot T) \cdot \Delta \hat{b}_k - u_2(k \cdot T) \cdot \Delta \hat{a}_k$$

Anstelle der Signalwerte $u_1(k \cdot T)$ und $u_2(k \cdot T)$ vor dem Entscheider 11 ist es auch möglich, nur deren Vorzeichen $SGN\{u_1(k \cdot T)\}$ und $SGN\{u_g(k \cdot T)\}$ zu verwenden, um aufwendige Multiplikationen zu vermeiden.

Da es bei gleichzeitiger adaptiver Einstellung der Filterkoeffizienten und der Regelung der Abtastphase zu einer Verkopplung dieser beiden Regelungen und daher zu einem instabilen Verhalten kommt, müssen die beiden Regelungen entkoppelt werden. Dies kann durch die zusätzliche gewichtete Addition eines Filterkoeffizienten erreicht werden. Dabei stellt sich die Abtastphase derart ein, daß sich für den verwendeten Filterkoeffizienten der Wert Null ergibt. Dieser Koeffizient sollte daher schon in der Startlösung des Empfangsfilterpaares möglichst klein sein.

Bei einer digitalen Abtastphasenregelung, bei der die Abtastphase sprunghaft in definierten Schritten verstellt werden kann, ist es sinnvoll, die Taktverstellung erst nach einer Mittelung über M Symbolintervalle durchzuführen. Das endgültige Taktregelkriterium ergibt sich daher wie folgt:

$$\Theta_{k,M} = \sum_{i=0}^{M-1} [\Theta_{k,M-1} \beta \cdot h_{1,2}(\nu)]$$

Der Wert $\nu$ bezeichnet dabei die Nummer der Koeffizienten des Empfangsfilter 7 oder 8 und $\beta$ den Bewertungskoeffizienten.

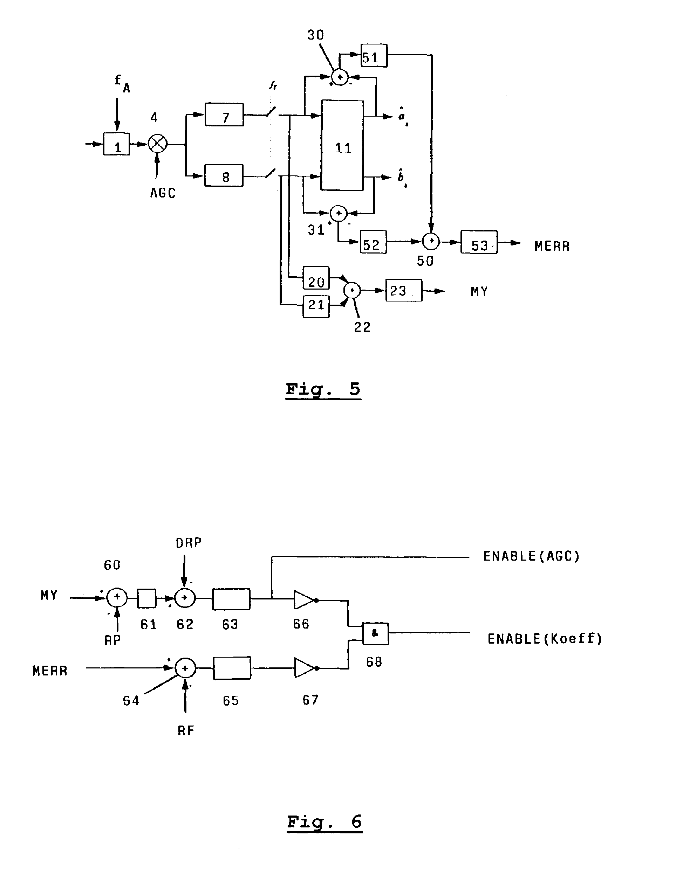

Fig. 5 zeigt eine Darstellung der benötigten Mittelwerte zur Generierung der ENABLE-Signale. Zur Generierung der ENABLE-Signale wird einerseits der mittlere Fehler MERR nach dem Entscheider 11, der durch die Addition der in entsprechenden Betragsbildnern 51, 52 erzeugten Beträge der Entscheidungsfehler $\Delta \hat{a}_k$ und $\Delta \hat{b}_k$ in einem Addierer 50 mit anschließender Mittelung in einem Mittelwertbildner 53 erzeugt wird, und andererseits der mittlere Empfangspegel MY nach der Empfangsfilterung verwendet, dessen Bildung bereits im Zusammenhang mit Fig. 2 erläutert wurde. Dabei stellt der mittlere Fehler MERR nach dem Entscheider 11 den absoluten gemittelten Mittelwert der beiden Entscheidungsfehler $\Delta \hat{a}_k$ und $\Delta \hat{b}_k$ dar.

Fig. 6 zeigt ein Blockschaltbild zur Generierung der beiden ENABLE-Signale, die die Pegelregelung und die Regelung der Filterkoeffizienten steuern.

Zur Erzeugung des ersten ENABLE-Signals für die Regelung des Verstärkungsfaktors AGC wird zu dem mittleren Empfangspegel MY in einem Addierer 60 ein Referenzpegel RP subtrahiert. In einem Betragsbildner 61 wird der Betrag des sich ergebenden Wertes gebildet. Zu diesem Betrag wird in einem weiteren Addierer 62 eine Referenzpegelabweichung DRP subtrahiert. Am Ausgang eines nachfolgenden Begrenzers 63 wird eine logische Eins erzeugt, wenn der Eingangswert größer oder gleich Null ist. Ist der Eingangswert des Begrenzers 63 kleiner als Null, so wird eine logische Null erzeugt. Dieses Signal bildet das ENABLE-Signal ENABLE(AGC) für die Pegelregelung 3.

Zur Erzeugung des zweiten ENABLE-Signals ENABLE(Koeff) zur Steuerung der Koeffizientenregelung wird zu dem mittleren Fehler MERR nach dem Entscheider 11 ein Referenztehler RF in einem Addierer 64 subtrahiert. Ein nachfolgender Begrenzer 65 erzeugt an seinem Ausgang eine logische Eins, wenn das Ausgangssignal des Addierers 64 größer oder gleich Null ist. Ist das Ausgangssignal des Addierers 64 kleiner Null, so erzeugt der Begrenzer 65 an seinem Ausgang eine logische Null. Die beiden Ausgangssignale der Begrenzer 63 und 65 werden in Invertierern 66 und 67 invertiert und die invertierten Signale werden einem UND-Gatter 68 zugeführt, dessen Ausgangssignal das gewünschte ENABLE-Signal zur Regelung der Filterkoeffizienten darstellt. Durch die Verknüpfung des ENABLE-Signals zur Steuerung der Regelung der Filterkoeffizienten wird sichergestellt, daß das zweite ENABLE-Signal für die Koeffizienten Regelung nur dann aktiv ist, d.h. logisch "1", wenn das erste ENABLE-Signal der Pegelregelung inaktiv ist, d.h. logisch "0".

Bezugszeichenliste

| | |
|---|---|
| 1 | A/D-Wandler |
| 2 | Taktregelung |
| 3 | Pegelverstärker |
| 4 | Multiplizierer |
| 5 | Verstärkerfaktorerzeuger |
| 6 | Regler |
| 7 | Empfangsfilter |
| 8 | Empfangsfilter |
| 9 | Regler |
| 10 | Regler |
| 11 | Entscheider |
| 20 | Betragbildner |
| 21 | Betragbildner |
| 22 | Addierer |
| 23 | Mittelwertbildner |
| 30 | Addierer |
| 31 | Addierer |
| 50 | Addierer |
| 51 | Betragsbildner |
| 52 | Betragsbildner |
| 53 | Mittelwertbildner |
| 60 | Addierer |
| 61 | Betragsbildner |
| 62 | Addierer |
| 63 | Begrenzer |
| 64 | Addierer |
| 65 | Begrenzer |
| 66 | Invertierer |
| 67 | Invertierer |
| 68 | UND-Gatter |
| I | Empfangssignal |
| AGC | Verstärkungsfaktor |
| h1 | Koeffizientensatz erster Empfangsfilter |
| h2 | Koeffizientensatz zweiter Empfangsfilter |
| RP | Referenzpegel |
| DRP | Abweichung vom Referenzpegel |
| RF | Referenzfehler |
| MERR | mittlerer Fehler |
| MY | mittlerer Pegel |

## Patentansprüche

1. Verfahren zur Regelung eines CAP-Empfängers mit einem taktgeregelten A/D-Wandler (1) zum Wandeln des Eingangssignals, einer digitalen Pegelregelung (3), einer adaptiven geregelten Empfangsfilterung mit zwei parallelen Filtern (7, 8) und einem nachfolgenden Entscheider (11) zur Ausgabe der rekonstruierten Signalkoordinaten, **dadurch gekennzeichnet,** daß die digitale Pegelregelung und die adaptive Empfangsfilterung entkoppelt werden, indem entweder die Einstellung der digitalen Pegelregelung oder die Koeffizienteneinstellung der adaptiven Empfangsfilterung aktiv ist.

2. Verfahren nach Anspruch 1, **dadurch gekennzeichnet,** daß zur Steuerung der Entkopplung zwei ENABLE-Signal (ENABLE(AGC), ENABLE(Koeff)) generiert werden, wobei das erste ENABLE-Signal (ENABLE(AGC)) die digitale Pegelregelung aktiviert, während das zweite ENABLE-Signal (ENABLE(Koeff)) die Koeffizienteneinstellung der adaptiven Empfangsfilterung aktiviert.

3. Verfahren nach einem der vorangegangenen Ansprüche **dadurch gekennzeichnet,** daß zur Generierung der ENABLE-Signale (ENABLE(AGC), ENABLE(Koeff)) der Mittelwert (MERR) der beiden Entscheidungsfehler und der Mittelwert (MY) des Empfangspegels verwendet werden.

4. Verfahren nach Anspruch 3, **dadurch gekennzeichnet,** daß der Mittelwert (MY) des Empfangspegels aus Signalwerten nach den Filtern (7, 8) bestimmt wird.

5. Verfahren nach Anspruch 3 oder 4, **dadurch gekennzeichnet,** daß der Mittelwert (MY) des Empfangspegels mit einem vorgegebenen Referenzwert (RP) verglichen wird, und das erste ENABLE-Signal auf Eins und das zweite ENABLE-Signal auf Null gesetzt wird, wenn der Mittelwert größer als der Referenzwert ist.

6. Verfahren nach Anspruch 5, **dadurch gekennzeichnet,** daß das erste ENABLE-Signal auf Null gesetzt wird, wenn der Mittelwert (MY) des Empfangspegels kleiner als der als der Referenzwert ist, das zweite ENABLE-Signal jedoch erst dann auf Eins gesetzt wird, wenn der mittlere Entscheidungsfehler (MERR) kleiner als eine vorbestimmte Schwelle ist.

7. Verfahren nach einem der vorangegangenen Ansprüche, **dadurch gekennzeichnet,** daß in der Startphase nur mit einem vierstufigen CAP-Signal gearbeitet wird.

8. Verfahren nach einem der vorangegangenen Ansprüche, **dadurch gekennzeichnet,** daß die Pegelregelung den Verstärkungsfaktor (AGC) so regelt, daß sich am Ausgang des Empfangsfilterpaares (7, 8) ein vorgegebener Pegelwert ergibt.

9. Verfahren nach einem der vorangegangenen Ansprüche, **dadurch gekennzeichnet,** daß zur Regelung der Koeffizienteneinstellung der jeweilige Entscheidungsfehler verwendet wird.

10. Verfahren nach einem der vorangegangenen Ansprüche, **dadurch gekennzeichnet,** daß die Taktregelung (2) aus den Werten vor und nach dem Entscheider (11) sowie einem Koeffizienten des Filterpaares (7, 8) abgeleitet wird.

11. Adaptiver CAP-Empfänger mit einem taktgeregelten A/D-Wandler (1) zum Wandeln des Eingangssignals, einer digitalen Pegelregelung (3), einer adaptiven geregelten Empfangsfilterung mit zwei parallelen Filtern (7, 8) und einem nachfolgenden Entscheider (11) zur Ausgabe der rekonstruierten Signalkoordinaten,
**dadurch gekennzeichnet,** daß die Regelung des Abtasttaktes, des digitalen Pegels und der Empfangsfilterung nach einem Verfahren der Ansprüche 1 - 10 erfolgt.

**Fig. 1**

**Fig. 2**

**Fig. 3**

**Fig. 4**

**Fig. 5**

**Fig. 6**

Europäisches
Patentamt

**EUROPÄISCHER RECHERCHENBERICHT**

Nummer der Anmeldung

EP 98 11 0217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO 87 06788 A (CTS) 5. November 1987<br>* Abbildung 10 *<br>--- | 1-11 | H04L25/06<br>H04L25/03<br>H04L25/49 |
| A | EP 0 831 624 A (TEXAS INSTRUMENTS)<br>25. März 1998<br>* Seite 4, Zeile 50 - Zeile 51 *<br>--- | 1 | |
| A | GB 2 267 629 A (FUJITSU) 8. Dezember 1993<br>* Seite 2, Zeile 15 - Zeile 17 *<br>----- | 1 | |

RECHERCHIERTE SACHGEBIETE (Int.Cl.6)

H04L

Der vorliegende Recherchenbericht wurde für alle Patentansprüche erstellt

| Recherchenort | Abschlußdatum der Recherche | Prüfer |
|---|---|---|
| DEN HAAG | 27. November 1998 | Scriven, P |

EPO FORM 1503 03.82 (P04C03)